Europäisches Patentamt

European Patent Office

Office européen des brevets

(11) Veröffentlichungsnummer : **0 062 204**
**B1**

(12) # EUROPÄISCHE PATENTSCHRIFT

(45) Veröffentlichungstag der Patentschrift :
**05.03.86**

(21) Anmeldenummer : **82102314.0**

(22) Anmeldetag : **20.03.82**

(51) Int. Cl.⁴ : **C 08 G 18/40, C 08 G 18/42,
C 08 L 71/02, C 08 L 67/00**

(54) **Lagerstabile Dispersionen von aromatischen Polyestern in Polyhydroxylverbindungen, Verfahren zu deren Herstellung und deren Verwendung zur Herstellung von gegebenenfalls zelligen Polyurethan- und/oder Polyisocyanurat-Kunststoffen.**

(30) Priorität : **27.03.81 DE 3112123**

(43) Veröffentlichungstag der Anmeldung :
**13.10.82 Patentblatt 82/41**

(45) Bekanntmachung des Hinweises auf die Patenterteilung : **05.03.86 Patentblatt 86/10**

(84) Benannte Vertragsstaaten :
**AT BE CH DE FR IT LI NL SE**

(56) Entgegenhaltungen :
**EP-A- 0 032 380
US-A- 4 102 868**

(73) Patentinhaber : **BASF Aktiengesellschaft
Carl-Bosch-Strasse 38
D-6700 Ludwigshafen (DE)**

(72) Erfinder : **Horn, Peter, Dr.
Neue Stuecker 15
D-6900 Heidelberg (DE)**
Erfinder : **Hesse, Anton, Dr.
Peter-Nickel-Strasse 15
D-6940 Weinheim (DE)**
Erfinder : **Heckmann, Walter, Dr.
Geiersbergstrasse 2
D-6940 Weinheim (DE)**
Erfinder : **Lebert, Ulrich, Dr.
In den Rausenaeckern 10
D-6719 Hettenleidelheim (DE)**
Erfinder : **Guthmann, Alfred, Dr.
Duerkheimer Strasse 33
D-6520 Worms (DE)**
Erfinder : **Marx, Matthias, Dr.
Seebacher Strasse 49
D-6702 Bad Duerkheim (DE)**

**Beschreibung**

Dispersionen von Füllstoffen in Polyhydroxylverbindungen, die vorzugsweise zur Herstellung von verstärkten Polyurethanschaumstoffen verwendet werden, sind Gegenstand zahlreicher Patente und -anmeldungen.

Nach Angaben der EP-OS 11 752 werden stabile Füllstoff-Polyol-Dispersionen durch Zerkleinern und gleichzeitigem Dispergieren von organischen und anorganischen Füllstoffen mit hohen örtlichen Energiedichten auf Teilchengrößen von kleiner als 7 μm in Gegenwart von Polyolen erhalten.

Bekannt sind ferner Dispersionen von Copolymeren, vorzugsweise Styrol-Acrylnitril-Copolymeren in Hydroxylgruppen aufweisenden Polyethern (DE-PS 12 22 669 (US 3 304 273, 3 383 351 und 3 523 093), DE-PS 11 52 536 (GB 1 040 452) und DE-PS 11 52 537 (GB 987 618)).

Werden die Vinylmonomeren direkt in den Polyetherolen copolymerisiert, so sind die erhaltenen Teilchen im allgemeinen so klein, daß keine Neigung zur Sedimentation besteht. Nachteilig bei diesen Dispersionen ist jedoch, daß sie frei von Monomeren sein müssen, um möglichst geruchlose und toxikologisch unbedenklich Polyurethan-Schaumstoffe zu ergeben, denn nur solche Produkte können in den typischen Einsatzgebieten, beispielsweise für Autositze und Polstermöbel, verwendet werden. Dies bedeutet jedoch, daß die Monomeren, beispielsweise mit Hilfe von Dünnschichtverdampfern aus den Dispersionen abgetrennt werden müssen.

Beschrieben wurden ferner Dispersionen von Polyisocyanat-Polyadditionsprodukten, insbesondere Polyhydrazodicarbonamiden, in Polyhydroxylverbindungen DE-AS 12 60 142 (US 3 325 421), DE-OS 25 13 816 (US 4 042 537) und Dispersionen von hochschmelzenden Polyestern in Polyhydroxylverbindungen (EP-OS 17 111). Organische Füllstoffe enthaltende Dispersionen der oben genannten Art werden üblicherweise durch in situ Herstellung der dispersen Phase in den Polyhydroxylverbindungen gewonnen. Nachteilig an den relativ stabilen Dispersionen ist, daß sie nur schwer reproduzierbar hergestellt werden können. Beginnen die Dispersionen bei der Herstellung oder Lagerung, sei es durch eine abweichende Reaktionsführung, Temperaturschwankungen u. a. oder durch einen äußeren, üblicherweise unbekannten Anlaß zu sedimentieren, dann können die Füllstoffe in der Regel nicht mehr dispergiert werden.

Nach Angaben der EP-OS 17 111 werden die Dispersionen durch Schmelzdispergierung unter hohem Schergefälle hergestellt. Charakteristisch hierbei ist, daß die disperse Phase bei der Polyurethanherstellung nicht in das Polymergerüst eingebunden wird, sondern als verstärkend wirkender Füllstoff im Formteil vorliegt. Kennzeichnend hierfür ist, daß die Temperatur bei der Polyurethanreaktion so zu wählen ist, daß der Schmelzpunkt der Kristalle nicht erreicht wird.

Lagerstabile Kristallitsuspensionen zur Herstellung von urethan- und/oder isocyanuratgruppenhaltigen Schaumstoffen werden auch in der EP-OS 32 380 beschrieben. Die Kristallitsuspensionen besitzen weiche Polyole als kohärente Phase, die als disperse Phase harte, kristalline organische Verbindungen mit mindestens einem Zerewitinof-aktiven Wasserstoffatom, Schmelzpunkten von 30 bis 260 °C und Molekulargewichten von 178 bis ungefähr 100 000 enthalten. Das Verfahren weist den Vorteil auf, daß die harte, kristalline organische Verbindung gezielt steuerbar durch ihren Schmelzpunkt bzw. den Übergang von der dispersen in die kohärente Phase in das Polyurethangerüst eingebaut werden kann. Dadurch können die bereits ausgebildeten Zellmembranen zusätzlich gefestigt werden. Nachteilig ist jedoch auch an diesem Verfahren, daß die Kristallitsuspensionen nur schwer reproduzierbar sind.

Aufgabe der vorliegenden Erfindung war es, lagerstabile, bei Raumtemperatur fließfähige Dispersionen zu entwickeln, die leicht reproduzierbar hergestellt werden können. Die Dispersionen sollten ferner auf üblichen Verarbeitungsmaschinen zu Polyurethan- oder Polyisocyanurat-Kunststoffen umgesetzt werden können.

Diese Aufgabe konnte überraschenderweise gelöst werden, durch die Verwendung von Polyestern mit speziellen Schmelzviskositäten aus ausgewählten Aufbaukomponenten als disperse Phase.

Gegenstand der Erfindung sind somit lagerstabile Dispersionen, die enthalten

a) 5 bis 35 Gew.%, bezogen auf die gesamte Dispersion, eines Polyesters aus Isophthalsäure, Terephthalsäure oder einer Mischung aus Terephthalsäure und aromatischen und/oder aliphatischen Dicarbonsäuren und Alkoholen mit 1 bis 6 Kohlenstoffatomen, mit einer Schmelzviskosität bei 150 °C von 15 bis 3 000 mPas als disperse Phase und

b) 65 bis 95 Gew.%, bezogen auf die gesamte Dispersion einer Polyhydroxylverbindung mit einem Schmelzpunkt unter 30 °C als kohärente Phase, in welcher die disperse Phase (a) bei Temperaturen oberhalb 35 °C vollständig löslich ist und wobei mehr als 50 Gew.% der dispergierten Phase in einer Teilchengröße von 10,5 bis 100 μm vorliegen.

Gegenstand der Erfindung ist ferner ein Verfahren zur Herstellung solch lagerstabiler Dispersionen, das dadurch gekennzeichnet ist, daß man

a) 5 bis 35 Gewichtsteile eines Polyesters aus Isophthalsäure, Terephthalsäure oder einer Mischung aus Terephthalsäure und aromatischen und/oder aliphatischen Dicarbonsäuren und Alkoholen mit 1 bis 6

2

Kohlenstoffatomen mit einer Schmelzviskosität bei 150 °C von 15 bis 3 000 mPas in

b) 65 bis 95 Gewichtsteilen einer Polyhydroxylverbindung mit einer Funktionalität von 2 bis 8, einer Hydroxylzahl von 20 bis 800 und einem Schmelzpunkt kleiner als 30 °C

bei Temperaturen von 35 °C bis 160 °C löst, der Lösung bei einer Temperatur oberhalb der Entmischungstemperatur der Komponenten (a) und (b) und unterhalb der Schmelztemperatur des Kristallisationsbeschleunigers 0,01 bis 3,0 Gewichtsteile pro 100 Gewichtsteile Lösung mindestens eines organischen und/oder anorganischen Kristallisationsbeschleunigers einverleibt und die Mischung abkühlen läßt.

Gegenstand der Erfindung ist schließlich auch die Verwendung der erfindungsgemäßen Dispersionen zur Herstellung von gegebenenfalls zelligen Polyurethan- und/oder Polyisocyanuratkunststoffen.

Als disperse Phase der erfindungsgemäßen Dispersionen eignen sich kristallisierbare Polyester (a) aus Isophthalsäure, Terephthalsäure oder einer Mischung aus Terephthalsäure und aromatischen und/oder aliphatischen Dicarbonsäuren und Alkoholen mit 1 bis 6 Kohlenstoffatomen, vorzugsweise Diolen mit 2 bis 6 Kohlenstoffatomen und primären Hydroxylgruppen, die mindestens einen Rest mit einem Zerewitinoff-aktiven Wasserstoffatom besitzen, in den Polyhydroxylverbindungen (b) der kohärenten Phase bei Temperaturen von 35 bis 160 °C, vorzugsweise 35 bis 110 °C löslich sind und bei der Umsetzung mit Polyisocyanaten in das Polyurethangerüst eingebaut werden.

Die kristallisierbaren Polyester (a) sind mono- bis tetrafunktionell, vorzugsweise difunktionell, besitzen als Gruppen mit Zerewitinoff-aktiven Wasserstoffatomen Carboxyl- und/oder vorzugsweise Hydroxylgruppen, weisen Hydroxylzahlen von 10 bis 400, vorzugsweise 60 bis 250 und Schmelzviskositäten bei 150 °C von 15 bis 3 000 mPas, vorzugsweise von 30 bis 700 mPas auf, wobei Dispersionen zur Herstellung von Pulyurethan-Weichschaumstoffen als disperse Phase vorzugsweise Polyester mit Schmelzviskositäten bei 150 °C von 30 bis 200 mPas und Dispersionen zur Herstellung von Polyurethan- oder Polyisocyanurat-Hartschaumstoffen solche mit Schmelzviskositäten bei 150 °C von 400 bis 700 mPas besitzen.

Die Polyester (a) können in an sich bekannter Weise durch Kondensation in inerten Lösungsmitteln, gegebenenfalls in Gegenwart von Wasserschleppmitteln erhalten werden. Vorzugsweise werden sie jedoch durch Schmelzkondensation aus den Aufbaukomponenten bei Temperaturen von 140 bis 220 °C, vorzugsweise von 170 bis 200 °C hergestellt. Die Polyester erstarren beim Abkühlen der Schmelze vorzugsweise amorph glasartig, manchmal teilkristallin, opak, besitzen hierbei Erweichungspunkte nach KSN (Krämer-Sarnow-Nagel) von 30 bis 95 °C, vorzugsweise von 55 bis 80 °C, und lassen sich stets durch Erwärmen in organischen Lösungsmitteln, beispielsweise Ethanol oder den Polyhydroxylverbindungen, kristallisieren. Die Molekulargewichte liegen zwischen ungefähr 180 und 2 500, vorzugsweise zwischen 200 und 1 500 und insbesondere 240 und 1 000.

Als Aufbaukomponente zur Herstellung der Polyester (a) wird insbesondere Isophthalsäure verwendet. Vorzüglich geeignet sind auch Mischungen aus Terephtalsäure und aromatischen Dicarbonsäuren, wie Isophthalsäure und ortho-Phthalsäure, und/oder gegebenenfalls ethylenisch ungesättigten aliphatischen Dicarbonsäuren mit 2 bis 6 Kohlenstoffatomen, wie z. B. Bernsteinsäure, Adipinsäure und Fumarsäure, wobei die Mischungen vorteilhafterweise einen Terephthalsäuregehalt von 20 bis 95, vorzugsweise 40 bis 80 Mol.%, bezogen auf die Dicarbonsäuremischung, besitzen. Bewährt haben sich beispielsweise Mischungen aus Terephthalsäure und Isophthalsäure mit mindestens 20 Mol.%, vorzugsweise 40 bis 80 Mol.% Terephthalsäure, Mischungen aus Terephthalsäure und ortho-Phthalsäure mit mindestens 60 Mol.%, vorzugsweise 70 bis 90 Mol.% Terephthalsäure und Mischungen aus Terephthalsäure und aliphatischen, gegebenenfalls ethylenisch ungesättigten Dicarbonsäure mit 2 bis 6 Kohlenstoffatomen mit mindestens 50 Mol.%, vorzugsweise 60 bis 95 Mol.% Terephthalsäure. Verwendet werden kann auch Terephthalsäure allein, jedoch nur in Kombination mit bestimmten Alkoholmischungen.

Anstelle der genannten Dicarbonsäuren können auch Dicarbonsäurederivate, beispielsweise deren Mono- und/oder Diester mit ein- und/oder zweiwertigen Alkoholen mit 1 bis 4 Kohlenstoffatomen oder deren Anhydride verwendet werden.

Als Alkohole mit 1 bis 6 Kohlenstoffatomen werden vorzugsweise symmetrisch aufgebaute Diole mit 2 bis 6 Kohlenstoffatomen und primären OH-Gruppen verwendet. Beispielhaft genannt seien Ethylenglykol, 1,3-Propandiol, 1,4-Butandiol, 1,5-Pentandiol, 1,6-Hexandiol, Dibromneopentylglykol und insbesondere Neopentylglykol. Die Diole können einzeln oder als Mischungen eingesetzt werden, wobei Mischungen aus Neopentylglykol und Ethylenglykol bevorzugt sind.

Zur Herstellung der Polyester (a) können neben den oben genannten symmetrisch Aufgebauten Diolen zusätzlich Monoalkohole in Mengen bis zu 20 Mol.%, vorzugsweise 5 bis 15 Mol.%, wie z. B. Benzylalkohol, Hexanol-1, oder 2-Ethylhexanol-1, unsymmetrisch aufgebaute Diole in Mengen bis zu 60 Mol.%, vorzugsweise 5 bis 50 Mol.%, wie z. B. 1,2-Propylenglykol, 1,3-Butylenglykol und Dipropylenglykol und mehrwertige Alkohole in Mengen bis zu 30 Mol.%, vorzugsweise 2 bis 20 Mol.%, wie z. B. Glycerin und Trimethylolpropan mitverwendet werden, wobei die Mol.% bezogen sind auf die insgesamt eingesetzte Alkoholmenge. Während Polyester (a) aus Isophthalsäure vorzugsweise mit symmetrisch aufgebauten Diolen kondensiert werden, muß bei ausschließlicher Verwendung von Terephthalsäure ein Teil der symmetrisch aufgebauten Diole durch unsymmetrische eingesetzt werden. Bewährt haben sich beispielsweise Mischungen aus symmetrisch aufgebauten Diolen, wie z. B. Ethylenglykol, Neopentylglykol,

3

0 062 204

Butandiol-1,4, Hexandiol-1,6 und unsymmetrisch aufgebauten Diolen, wie z. B. Propylenglykol-1,2, Dipropylenglykol, Butandiol-1,3 in Molprozenten von 1 : 99 bis 99 : 1.

Für die lagerstabilen Dispersionen eignen sich als kohärente Phase bei üblichen Verarbeitungstemperaturen für Polyurethane, z. B. bei 10 bis 30 °C, insbesondere 25 °C, flüssige Polyhydroxylverbindungen (b) mit einer Funktionalität von 2 bis 8 und einer Hydroxylzahl von 20 bis 800. Verwendet werden können auch Mischungen aus solchen Polyhydroxylverbindungen (b) und löslichen, kristallinen Komponenten mit der Maßgabe, daß die Mischung homogen und in dem genannten Temperaturbereich flüssig ist.

Als Polyhydroxylverbindungen (b) in Betracht kommen beispielsweise :

Polyester-polyole mit Funktionalitäten von 2 bis 6, vorzugsweise 2 bis 4 und Hydroxylzahlen von 20 bis 700, vorzugsweise von 280 bis 490 auf Basis von organischen Dicarbonsäuren, vorzugsweise aliphatischen Dicarbonsäuren mit 2 bis 12, vorzugsweise 4 bis 8 Kohlenstoffatomen im Alkylenrest und mehrwertigen Alkoholen, vorzugsweise Diolen. Genannt seien beispielhaft aliphatische Dicarbonsäuren, wie Bernsteinsäure, Glutarsäure, Pimelinsäure, Undecandisäure, Dodecandisäure und vorzugsweise Adipinsäure und aromatische Dicarbonsäuren, wie Phthalsäure und Terephthalsäure. Beispiele für zwei- und mehrwertige, insbesondere zweiwertige Alkohole sind : 1,2- bzw. 1,3-Propylenglykol, Dipropylenglykol, 1,5-Pentamethylenglykol, 1,8-Octamethylenglykol, Decamethylenglykol-1,10, Glycerin, Trimethylolpropan, Pentaerythrit sowie Zuckeralkohole, z. B. Sorbit und vorzugsweise Ethylenglykol, Diethylenglykol, 1,4-Butylenglykol und 1,6-Hexamethylenglykol. Als mehrwertige Alkohole können ferner Alkanolamine, Dialkanolamine und Trialkanolamine, z. B. Ethanolamin, Diethanolamin, Triethanolamin und Triisopropanolamin verwendet werden. Die genannten Dicarbonsäuren und mehrwertigen Alkohole können auch in Form von Mischungen eingesetzt werden. Besonders bewährt haben sich und daher vorzugsweise verwendet werden Polyester-polyole aus Adipinsäure oder Mischungen aus Bernstein-, Glutar- und Adipinsäure und Diethylenglykol und Alkoholmischungen aus Ethylenglykol/1,4-Butylenglykol, Ethylenglykol/Diethylenglykol, Ethylenglykol/Trimethylolpropan, Diethylenglykol/Trimethylolpropan, Ethylenglykol/Pentaerythrit, Ethylenglykol/Triisopropanolamin und Diethylenglykol/Triisopropanolamin.

Die Polyester-polyole besitzen Molekulargewichte von ungefähr 220 bis 3 000 und vorzugsweise von 300 bis 800.

Anstelle der genannten Polyester-polyole, die einzeln oder als Gemische eingesetzt werden können, können auch homogene, bei 10 bis 30 °C flüssige Mischungen aus den oben genannten Polyester-polyolen und löslichen kristallinen organischen Komponenten, z. B. hydroxylgruppenhaltigen Polyestern aus aromatischen Dicarbonsäuren und vorzugsweise unsubstituierten, linearen Diolen, Anwendung finden.

Vorzugsweise als Polyhydroxylverbindungen (b) für die kohärente Phase verwendet werden jedoch Polyether-polyole mit Funktionalitäten von 2 bis 8, vorzugsweise 2 bis 4 und Hydroxylzahlen von 20 bis 800, vorzugsweise von 25 bis 700, die nach bekannten Verfahren, beispielsweise durch anionische Polymerisation mit Alkalihydroxiden, wie Natrium- oder Kaliumhydroxid oder Alkalialkoholaten, wie Natriummethylat, Kalium- oder Natriumethylat oder Kaliumisopropylat als Katalysatoren oder durch kationische Polymerisation mit Lewissäuren, wie Antimonpentachlorid, Borfluorid-Etherat u. a. als Katalysatoren aus einem oder mehreren Alkylenoxiden mit 2 bis 4 Kohlenstoffatomen im Alkylenrest und einem Startermolekül, das 2 bis 8, vorzugsweise 2 bis 4 aktive Wasserstoffatome enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht : Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan. Als Polyether-polyole, hergestellt aus Verbindungen der erwähnten Gruppe sind besonders interessant N,N,N',N'-Tetrakis-(2-hydroxyethyl)-ethylendiamin, N,N,N',N'-Tetrakis-(2-hydroxypropyl)-ethylendiamin, N,N,N',N'',N''-Pentakis-(2-hydroxypropyl)-diethylentriamin, Phenyldiisopropanolamin und höhere Alkylenoxidaddukte von Anilin.

Als Startermoleküle kommen ferner in Betracht Alkanolamine, wie Ethanolamin, Diethanolamin, N-Methyl- und N-Ethylethanolamin, N-Methyl- und N-Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethylenglykol, Propylenglykol-1,2 und -1,3, Diethylenglykol, Dipropylenglykol, Butylenglykol-1,4, Hexamethylenglykol-1,6, Glycerin, Trimethylol-propan, Pentaerythrit, Sorbit und Saccharose.

Die Polyether-polyole besitzen Molekulargewichte von 200 bis 7 000 und vorzugsweise von 6 500. Sie können ebenso wie die Polyester-polyole einzeln oder in Form von Mischungen verwendet werden.

Als kohärente Phase verwendet werden können auch Mischungen aus Polyester-polyolen und

4

Polyether-polyolen sowie hydroxylgruppenhaltige Polyesteramide und Polyacetale und deren Gemische, sofern sie den oben genannten Bedingungen entsprechen.

Die erfindungsgemäßen Dispersionen enthalten als disperse Phase 5 bis 35 Gew.%, vorzugsweise 10 bis 30 Gew.% und insbesondere 15 bis 26 Gew.%, bezogen auf die gesamte Dispersion, mindestens eines kristallinen Polyesters (a) und 65 bis 95 Gew.%, vorzugsweise 70 bis 90 Gew.% und insbesondere 74 bis 85 Gew.%, bezogen auf die gesamte Dispersion, mindestens einer Polyhydroxylverbindung (b) als kohärente Phase. Die Dispersionen sind flüssig und zeigen auch nach längeren Lagerzeiten keine Sedimentation.

Zu ihrer Herstellung werden die Polyester (a) und Polyhydroxylverbindungen (b) gemischt und bis zur Bildung einer klaren Lösung erwärmt. Hierzu sind üblicherweise Temperaturen von 35 bis 160 °C, vorzugsweise von 110 bis 150 °C ausreichend. Die Lösung läßt man unter Rühren mit geringer Scherwirkung abkühlen. Bei einer Temperatur oberhalb der Entmischungstemperatur der Komponenten (a) und (b) und unterhalb der Schmelztemperatur des Kristallisationsbeschleunigers wird der Lösung 0,01 bis 3 Gew.%, vorzugsweise 0,02 bis 0,2 Gew.%, bezogen auf die gesamte Lösung, eines organischen und/oder anorganischen Kristallisationsbeschleunigers einverleibt. Der genannte Temperaturbereich wird in Abhängigkeit von den verwendeten Ausgangskomponenten experimentell bestimmt. Als Kristallisationsbeschleuniger werden vorzugsweise kristallisierte Polyester (a) oder insbesondere bereits zuvor hergestellte Dispersionen aus denselben Komponenten (a) und (b) verwendet. Geeignet sind auch Kristallisationsbeschleuniger wie z. B. Talkum, Metallstearate, beispielsweise Zink-, Calcium- und/oder Magnesiumstearat und andere Nukleierungsmittel. Wird auf den Zusatz eines Kristallisationsbeschleunigers verzichtet, so ist eine reproduzierbare Herstellung der erfindungsgemäßen Dispersionen üblicherweise nicht gewährleistet. In solchen Fällen bilden sich häufig Klumpen und Festkörper, die sich am Rührwerk und an den Behälterwandungen niederschlagen.

Nach einer anderen Verfahrensvariante, läßt man den Polyester (a) zunächst aus einem Teil der Polyhydroxylverbindung (b) auskristallisieren und verdünnt anschließend die erhaltene Dispersion bei 30 bis 80 °C mit dem restlichen Teil der Polyhydroxylverbindung (b).

Bei Herstellung der erfindungsgemäßen Dispersionen ist auch von Bedeutung, daß der Schmelzpunkt der kristallinen Polyester (a) oberhalb der Entmischungstemperatur der Lösung aus den Komponenten (a) und (b) liegt. Im umgekehrten Fall kann es zur Bildung von groben Feststoffpartikeln kommen ; die eine Verarbeitung der Dispersion erschweren oder gar unmöglich machen.

Die Herstellung der erfindungsgemäßen Dispersionen kann diskontinuierlich in Rührkesseln oder kontinuierlich in einer Rührkesselkaskade durchgeführt werden.

Die Kristallitgröße der Polyester (a) der Dispersionen bewegt sich zwischen 1 µm und 100 µm, wobei mehr als 50 Gew.% der Polyester (a) eine Teilchengröße von 10,5 bis 100 µm, vorzugsweise von 12 bis 100 µm und insbesondere von 12 bis 40 µm besitzen.

Die erfindungsgemäßen Dispersionen werden vorzugsweise zur Herstellung von kompakten und insbesondere zelligen Polyurethan- und/oder Polyisocyanuratkunststoffen verwendet. Vorteilhaft ist hierbei, daß sowohl die Polyester (a) als auch die Polyhydroxylverbindungen (b) mit den Polyisocyanaten zu Polyurethanen umgesetzt werden. Die Polyester (a) können gezielt steuerbar durch ihren Schmelzpunkt bzw. den Übergang von der dispersen in die kohärente Phase in das Schaumgerüst eingebaut werden. Da die Polyester (a) erst zu einem Zeitpunkt eingebaut werden, zu dem das Polyurethangerüst bereits teilweise ausgebildet ist, können gegebenenfalls vorhandene Zellmembranen gezielt stabilisiert werden. Ferner kann durch den Verbrauch an Schmelzwärme die Temperatur des Formteilkerns kontrollierend beeinflußt werden.

Zur Herstellung von kompakten oder vorzugsweise zelligen Polyurethanen und/oder Polyisocyanuraten können die erfindungsgemäßen Dispersionen direkt verarbeitet werden. Die lagerstabilen Dispersionen können jedoch auch gegebenenfalls vor der Verarbeitung mit den oben genannten Polyhydroxylverbindungen verdünnt, d. h. auf den optimalen Gehalt an Polyester (a) eingestellt werden.

Als Polyisocyanate kommen aliphatische, cycloaliphatische, araliphatische und vorzugsweise aromatische mehrwertige Isocyanate in Frage. Im einzelnen seien beispielhaft genannt : Alkylendiisocyanate mit 4 bis 12 Kohlenstoffatomen im Alkylenrest, wie 1,12-Dodecamethylen-diisocyanat, Tetramethylendiisocyanat-1,4 und vorzugsweise Hexamethylen-diisocyanat-1,6 ; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat) 2,4- und 2,6-Hexahydrotoluylen-diisocyanat sowie entsprechende Isomerengemische, 4,4'-, 2,2'- und 2,4'-Dicyclohexylmethandiisocyanat sowie die entsprechenden Isomerengemische und vorzugsweise aromatische Di- und Polyisocyanate wie 4,4'-, 2,4'- und 2,2'-Diisocyanato-diphenylmethan und die entsprechenden Isomerengemische, 2,4- und 2,6-Diisocyanato-toluol und die entsprechenden Isomerengemische, 1,5-Diisocyanatonaphthalin, Polyphenyl-polymethylen-polyisocyanate, 2,4,6-Triisocyanato-toluol und vorzugsweise Gemische aus Diphenylmethan-diisocyanaten und Polyphenyl-polymethylen-polyisocyanaten (Roh-MDI). Die genannten Di- und Polyisocyanate können einzeln oder in Form von Mischungen eingesetzt werden.

Häufig werden auch sogenannte modifizierte mehrwertige Isocyanate, d. h. Produkte die durch chemische Umsetzung obigen Di- und/oder Polyisocyanate erhalten werden, verwendet. Als modifizierte organische Di- und Polyisocyanate kommen beispielsweise in Betracht : Carbodiimidgruppen aufweisende Polyisocyanate gemäß DE-PS 10 92 007, Allophanatgruppen aufweisende Polyisocyanate, wie sie z. B. in der britischen Patentschrift 994 890, den ausgelegten Unterlagen des belgischen Patents 761 626

und der NL-OS 71 02 524 beschrieben werden, Isocyanuratgruppen aufweisende Polyisocyanate wie sie z. B. in den DE-PS 10 22 789, 12 22 067 und 10 27 394 sowie den DE-OS 19 29 034 und 20 04 048 beschrieben werden. Urethangruppen aufweisende Polyisocyanate, wie sie z. B. in den ausgelegten Unterlagen des belgischen Patents 752 261 oder der US-PS 3 394 164 beschrieben werden, acylierte Harnstoffgruppen aufweisende Polyisocyanate z. B. gemäß DE-PS 12 30 778, Biuretgruppen aufweisende Polyisocyanate z. B. gemäß DE-PS 11 01 394 und GB-PS 889 050 ; durch Telomerisationsreaktionen hergestellte Polyisocyanate z. B. entsprechend den ausgelegten Unterlagen des belgischen Patents 723 640, Estergruppen aufweisende Polyisocyanate, wie sie z. B. in der GB-PS 965 474 und 10 72 956, der US-PS 3 567 765 und der DE-PS 12 31 688 genannt werden.

Vorzugsweise kommen jedoch zur Anwendung : urethangruppenhaltige Polyisocyanate, beispielsweise mit niedermolekularen Diolen, Triolen oder Polyoxypropylenglykolen modifiziertes 4,4'-Diphenylmethan-diisocyanat oder Toluylen-diisocyanat, Carbodiimidgruppen und/oder Isocyanuratringe enthaltende Polyisocyanate, z. B. auf Diphenylmethan-diisocyanat und/oder Toluylendiisocyanat-Basis und insbesondere Toluylendiisocyanate, Diphenylmethan-diisocyanate, Mischungen aus Diphenylmethan-diisocyanaten und Polyphenyl-polymethylen-polyisocyanaten (Roh-MDI) und Gemische aus Toluylendiisocyanaten und Roh-MDI.

Zu Treibmitteln, welche zur Herstellung von zelligen Polyurethan-Elastomeren und Polyurethan- und/oder Polyisocyanurat-Schaumstoffen verwendet werden können, gehört Wasser, das mit Isocyanatgruppen unter Bildung von Kohlendioxid reagiert. Die Wassermengen, die zweckmäßigerweise verwendet werden, betragen 0,1 bis 3 %, bezogen auf das Gewicht an Polyisocyanat, bzw. 0,1 bis 2 %, bezogen auf das Gesamtgewicht von Polyisocyanat und Dispersion. Gegebenenfalls können auch größere Wassermengen verwendet werden.

Andere verwendbare Treibmittel sind niedrig siedende Flüssigkeiten, die unter dem Einfluß der exothermen Polymerisation- bzw. Polyadditionsreaktion verdampfen. Geeignet sind Flüssigkeiten, welche gegenüber dem organischen Polyisocyanat inert sind und Siedepunkte unter 100 °C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung der Schaumstoffe hängt ab von der Schaumdichte, die man erreichen will sowie gegebenenfalls von der Mitverwendung von Wasser. Im allgemeinen liefern Mengen von 5 bis 40 Gew. %, bezogen auf 100 Gewichtsteile organisches Polyisocyanat, bzw. 2 bis 30 Gew. %, bezogen auf das Gesamtgewicht von Polyisocyanat und Dispersion, zufriedenstellende Ergebnisse. Zur Herstellung von Integralschaumstoffen werden nur inerte, niedrig siedende Flüssigkeiten verwendet.

Geeignete Katalysatoren zur Beschleunigung der Polyurethanbildung zwischen der Dispersion, gegebenenfalls Wasser und den Polyisocyanaten sind beispielsweise tertiäre Amine, wie Dimethylbenzylamin, N,N,N',N'-Tetramethyldiamino-ethylether, Bis-(dimethylaminopropyl)-harnstoff, N-Methyl- bzw. N-Ethyl-morpholin, Dimethylpiperazin, 1,2-Dimethylimidazol, 1-Aza-bicyclo-(3,3,0)-octan und vorzugsweise Triethylendiamin, Metallsalze, wie Zinndioctoat, Bleioctoat, Zinn-diethyl-hexoat und vorzugsweise Zinn-(II) salze und Dibutylzinndilaurat sowie insbesondere Mischungen aus tert. Aminen und organischen Zinnsalzen. Vorzugsweise verwendet werden 0,1 bis 5,0 Gew. % Katalysator auf Basis tertiärer Amine und/oder 0,01 bis 1,0 Gew. % Metallsalze, bezogen auf das Gewicht der Dispersion.

Zur Herstellung von isocyanuratgruppenhaltigen Schaumstoffen haben sich die üblichen Cyclisierungs- und Polymerisations-katalysatoren für Polyisocyanate bewährt. Als Beispiele seien genannt : starke Basen, wie quarternäre Ammoniumhydroxide, beispielsweise Benzyltrimethylammoniumhydroxid ; Alkalimetallhydroxide, beispielsweise Natrium- oder Kalium-hydroxid ; Alkalimetallalkoxide, beispielsweise Natriummethylat und Kaliumisopropylat ; Trialkylphosphine, beispielsweise Triethylphosphin ; Alkylaminoalkylphenole, beispielsweise 2,4,6-Tris-(dimethylaminomethyl)-phenol ; 3- und/oder 4-substituierte Pyridine, beispielsweise 3- oder 4-Methylpyridin ; metall-organische Salze, beispielsweise Tetrakis-(hydroxyethyl)-natriumborat ; Friedel-Crafts-Katalysatoren, beispielsweise Aluminiumchlorid, Eisen-(III)-chlorid, Borfluorid und Zinkchlorid und Alkalimetallsalze von schwachen organischen Säuren und Nitrophenolaten, beispielsweise Kaliumoctoat, Kalium-2-ethyl-hexoat, Kalium-benzoat, Natriumpikrat und phthalimid-kalium. Vorzugsweise verwendet werden die stark basischen N,N',N"-Tris-(dialkylaminoalkyl)-s-hexahydrotriazine, beispielsweise das N,N',N"-Tris-(dimethylaminopropyl)-s-hexahydrotriazin, gegebenenfalls in Kombination mit aliphatischen niedermolekularen Mono- und/oder Dicarbonsäuren, beispielsweise Essigsäure und/oder Adipinsäure oder aromatischen Carbonsäuren, wie Benzoesäure.

Die geeignete Menge an Isocyanuratgruppen bildenden Katalysatoren ist abhängig von der Wirksamkeit des in Frage kommenden Katalysators. Im allgemeinen hat es sich als zweckmäßig erwiesen, 1 bis 15 Gewichtsteile, vorzugsweise 3,5 bis 10 Gewichtsteile Katalysator für jeweils 100 Gewichtsteile an organischem Polyisocyanat zu verwenden.

Zur Herstellung von isocyanuratgruppenhaltigen Polyurethanschaumstoffen können die die Urethan- und Isocyanuratgruppenbildung förderndeKatalysatoren auch gemischt werden.

Der gegebenenfalls schaumfähigen Reaktionsmischung aus Polyisocyanat, Dispersion und Katalysator sowie gegebenenfalls Treibmittel können, wie bereits ausgeführt wurde, gegebenenfalls noch Hilfs- und Zusatzstoffe einverleibt werden. Genannt seien beispielsweise Kettenverlängerungsmittel, organische und anorganische Füllstoffe, oberflächenaktive Schaumstabilisatoren, Hydrolyseschutzmittel, Porenregler, fungistatisch und bakteriotatisch wirkende Substanzen, Farbstoffe, Pigmente und Flammschutzmittel.

Die gegebenenfalls zellhaltigen Polyurethane und/oder Polyisocyanurate können ohne zusätzliche Mitverwendung von üblichen Kettenverlängerungsmitteln oder Vernetzern hergestellt werden. Dennoch hat es sich in manchen Fällen, beispielsweise aus verarbeitungstechnischen Gründen, als zweckmäßig erwiesen, Kettenverlängerungsmittel oder Vernetzer einzusetzen. Geeignete Kettenverlängerungsmittel oder Vernetzer besitzen Molekulargewichte von 30 bis 600, vorzugsweise 60 bis 300 und weisen vorzugsweise zwei aktive Wasserstoffatome auf. In Betracht kommen beispielsweise aliphatische und/oder aromatische Diole mit 2 bis 14, vorzugsweise 2 bis 6 Kohlenstoffatomen, wie 1,2- bzw. 1,3-Propandiol, Pentandiol-1,5, Hexandiol-1,6 und vorzugsweise Ethandiol, Butandiol-1,4 und Bis-(2-hydroxyethyl)-hydrochinon, Diamine, wie Ethylendiamin und gegebenenfalls 3,3'- bzw. 3,3',5,5'-di- bzw. tetrasubstituierte 4,4'-Diaminodiphenylmethane, Ethanolamine, wie Triethanolamin und mehrwertige Alkohole, wie Glycerin, Triemthylolpropan und niedermolekulare hydroxylgruppenhaltige Polyalkylenoxide aus den vorgenannten Ausgangsstoffen.

Den erfindungsgemäßen Dispersionen können auch Füllstoffe, beispielsweise organische und anorganische Füllstoffe, mit Teilchengrößen kleiner als 10 μm, vorzugsweise von 0,1 μm bis 5 μm in Mengen von 5 bis 30 Gew. %, vorzugsweise von 10 bis 20 Gew. %, bezogen auf das Gesamtgewicht der Dispersion einverleibt werden.

Als organische Füllstoffe seien beispielhaft genannt :

Sprödharze, wie sie bekannt sind als Bindemittel für die Druckindustrie, z. B. solche auf Basis Phenol, Kolophonium oder Melamin und Formaldehyd, Polyester mit Schmelzpunkten größer 190 °c, vorzugsweise vernetzte Polyester auf Basis von di- oder höherfunktionellen Carbonsäuren mit Di- oder mit Monomeren, wie (Meth)- acrylsäurederivaten, Homo- und Copolymerisate des Cyclopentadiens, Ketonharze, z. B. auf Basis von Cyclohexanon und spröde Polyurethanmaterialien mit Schmelzpunkten größer als 190 °C, beispielsweise vernetzte Polyurethane und Isocyanuratgruppen enthaltende Polyurethane, Polyvinylchlorid, Polyamid-6 und -6,6, acrylatpfropfkautschuke, Butadienpfropfkautschuke sowie Polyvinylacetat.

Besonders bewährt haben sich und daher vorzugsweise verwendet werden jedoch anorganische Füllstoffe, wie die an sich bekannten üblichen Füllstoffe, Verstärkungsmittel, Beschwerungsmittel, Mittel zur Verbesserung des Abriebverhaltens in Anstrichfarben, Beschichtungsmittel usw. Verwendet werden können jedoch auch anorganische Pigmente. Im einzelnen seien beispielhaft genannt : silikatische Mineralien, beispielsweise Schichtsilikate, wie Antigorit, Serpentin, Hornblenden, Amphibole, Chrisotil, Talkum, Metalloxide, wie Kaolin, Aluminiumoxidhydrat, Titanoxide, Eisenoxide, Metallsalze, wie Kreide, Schwerspat, Bariumsulfat, anorganische Pigmente, wie Cadmiumsulfid, Zinksulfid sowie Glas.

Als Hilfsmittel genannt seien ferner beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Rizinolsäureester und Türkischrotöl, die in Mengen von 0,1 bis 5 Gewichtsteilen pro 100 Gewichtsteile der Mischung aus Polyisocyanat und Dispersion angewandt werden.

Geeignete Flammschutzmittel sind beispielsweise Trikresylphosphat, Tris-2-chlorethylphosphat, Tris-chlorpropylphosphat und Tris-2,3-dibrompropylphosphat, bromierte und chlorierte Polyether, Umsetzungsprodukte von bromierten und/oder chlorierten aromatischen Dicarbonsäureanhydriden mit bi- und höherfunktionellen Alkoholen wie beispielsweise Ethylenglykol, Diethylenglykol und Glycerin.

Außer den bereits genannten halogensubstituierten Phosphaten können auch anorganische Flammschutzmittel, wie Antimontrioxid, Arsenoxid, Ammoniumphosphat, Ammoniumsulfat, Alkalimetallsalze der unterphosphorigen Säure, Aluminium-oxidhydrat und elementarer Phosphor sowie Isocyanursäurederivate, wie Melamin, Dicyan-diamid und Guanidinsalze, z. B. Guanidincarbonat, zum Flammfestmachen der Schaumstoffe verwendet werden. Im allgemeinen hat es sich als vorteilhaft erwiesen, 5 bis 50 Gewichtsteile, vorzugsweise 5 bis 25 Gewichtsteile der genannten Flammschutzmittel für jeweils 100 Gewichtsteile der Mischung aus organischem Polyisocyanat und Dispersion zu verwenden.

Nähere Angaben über die oben genannten anderen üblichen Zusatzstoffe sind der Fachliteratur, beispielsweise der Monographie von J. H. Saunders und K. C. Frisch « High Polymers » Band XVI, Polyurethanes, Teil 1 und 2, Verlag Interscience Publishers 1962 bzw. 1964, zu entnehmen.

Zur Herstellung von urethangruppenthaltigen Schaumstoffen werden die organischen Polyisocyanate und Dispersionen bzw. Mischungen aus Dispersionen und zusätzlichen Poly-ester- und/oder Polyetherpolyolen in solchen Mengen zur Umsetzung gebracht, daß das Verhältnis von reaktiven Wasserstoffatomen zu NCO-Gruppen 1 : 0,8 bis 2,5, vorzugsweise 1 : 0,9 bis 1,2 und insbesondere ungefähr 1 : 1 ist und der Anteil an Polyester (a) als disperse Phase in der schaumfähigen Reaktionsmischung 0,5 bis 30 Gew. %, vorzugsweise 1 bis 26 Gew. %, bezogen auf das Gesamtgewicht an Polyhydroxylverbindungen und gegebenenfalls Kettenverlängerungsmitteln oder Vernetzern beträgt.

Zur Herstellung von urethangruppenhaltigen Polyisocyanurat-schaumstoffen haben sich Mengenverhältnisse von NCO-Gruppen der Polyisocyanate zu reaktiven Wasserstoffatomen der Kristallitsuspension von 2 bis 60 : 1, vorzugsweise von 2 bis 10 : 1 bewährt. Der Anteil an Polyester (a) als disperser Phase in der schaumfähigen Reaktionsmischung beträgt auch hier 0,5 bis 30 Gew. %, vorzugsweise 1 bis 26 Gew. %, bezogen auf das Gesamtgewicht an Polyhydroxylverbindungen und gegebenenfalls Kettenverlängerungsmitteln oder Vernetzern.

Die urethan- und/oder isocyanuratgruppenhaltigen Schaumstoffe werden vorzugsweise nach dem one shot-Verfahren hergestellt. Hierzu mischt man die Polyisocyanate mit der erfindungsgemäßen Dispersion, den Katalysatoren, Treibmittel und gegebenenfalls Hilfs- und Zusatzstoffen intensiv in den genannten Mengenverhältnissen bei Temperaturen von 0 bis 50 °C, vorzugsweise 15 bis 40 °C, und läßt danach die Reaktionsmischung in offenen oder geschlossenen Formen aufschäumen.

Die erfindungsgemäß hergestellten Polyurethanschaumstoffe besitzen bei freier Aufschäumung Dichten von 10 bis 300 g/l, vorzugsweise von 60 bis 130 g/l. Die urethangruppenhaltigen Polyisocyanurat-schaumstoffe besitzen Dichten von 5 bis 100 g/l, vorzugsweise von 10 bis 50 g/l.

Die Schaumstoffe finden Verwendung als Isoliermaterialien in Kühlaggregaten, zum Verkleiden von Rohren und auf dem Bausektor.

Die in den Beispielen genannten Teile beziehen sich auf das Gewicht.

## Beispiele

Als disperse Phase werden die in Tabelle 1 genannten Polyester (a) eingesetzt, die in bekannter Weise durch Schmelzkondensation hergestellt wurden.

In der Tabelle 1 wurden gemessen :

die Schmelzviskositäten :

1) mit einem Epprecht[®]-Viskosimeter

2) mit einem Drehmomentrheometer (Rheomat® T 15 von Contraves AG, Zürich) und der Erweichungspunkt

3) mit dem Schmelzpunktsbestimmungsgerät 510 (der Firma Büchi, Flawil/Schweiz).

Als kohärente Phase werden die folgenden, in Tabelle 2 genannten Polyhydroxylverbindungen (b) oder deren Gemische verwendet.

(Siehe Tabelle 1 Seite 9 f.)

Tabelle 1 Als disperse Phase verwendete Polyester (a)

| Bezeichnung | A | B | C | D | E | Vergleichssubstanzen | |
|---|---|---|---|---|---|---|---|
| | | | | | | Z | Y |
| Polyesteraufbaukompo-nenten | Isophthal-säure | 1d | 1d | 1d | Terephthal-säure | Terephthal-säure | o-Phthal-säure |
| | Neopentyl-glykol | 1d | 1d | 1d | o-Phthal-säure | Butandiol-$-1,4$ | Ethylen-glykol |
| | Ethylen-glykol | 1d | 1d | 1d | Ethylen-glykol | | |
| im Molverhältnis | 1:1,35:0,05 | 1:1,3:0,05 | 1:1,6:0,05 | 1:1,7:0,05 | 1:1:3,2 | 1:1,4 | 1:1,7 |
| Säurezahl [mg KOH] | 4,6 | 5,0 | 4,1 | 4,0 | 1,6 | – | 1,8 |
| Hydroxylzahl [mg KOH/g] | 135 | 120 | 211 | 242 | 246 | – | 270 |
| Erweichungspunkt [$^{o}$C] nach KSN (Krämer-Sarnow-Nagel) | 55,5 | 61 | < 55 | < 55 | bei 25$^{o}$C teigig | 193 [3)] | flüssig bei 25$^{o}$C |
| Viskosität [mPas] bei 150$^{o}$C [1)] | 420 | 640 | 80 | 75 | 30 | – | – |
| 125$^{o}$C [1)] | 2140 | 2800 | – | – | 90 | – | – |
| 105$^{o}$C [2)] | – | 22430 | – | – | – | – | – |
| 95$^{o}$C [2)] | 31780 | – | – | – | – | – | – |

0 062 204

Tabelle 2 Polyhydroxylverbindungen (b)

| Nr. | Bezeichnung | Viskosität mPas.bei 25°C | Hydroxylzahl [mg KOH/g] |
|---|---|---|---|
| I | Polyether-polyol auf Basis Sucrose/Propylenoxid | 5000 | 400 |
| II | Polyether-polyol auf Basis Glycerin/Propylenoxid | 1200 | 400 |
| III | Polyether-polyol auf Basis Sorbit/Propylenoxid | 3500 | 255 |
| IV | Polyether-polyol auf Basis Glycerin/Propylenoxid (80 %)/Ethylenoxid (20 %) | 1300 | 26 |
| V | Polyester-polyol auf Basis Adipinsäure-Diethylenglykol Säurezahl 2,8 [mg KOH/g] | 50 (75°C) | 348 |
| VI | Polyether-polyol auf Bais Glycerin/Propylenoxid (85 %) / Ethylenoxid (15 %) | 800 | 35 |
| VII | Polyester-polyol auf Basis ortho-Phthalsäure/ Ethylenglykol (Molverhältnis 1:2) Säurezahl: 1,2 [mg KOH/g] | 29160 (23°C) | 362 |
| VlII | Polyether-polyol auf Basis Sorbit/Wasser/ Propylenoxid | 18750 | 490 |
| IX | Polyether-polyol auf Basis Ethylendiamin/ Propylenoxid | 4100 | 450 |

Herstellung von Polyester E und Vergleichssubstanz Polyester Y

Polyester E : wurde durch Schmelzkondensation aus Terephthalsäure, o-Phthalsäure und Ethylenglykol im Molverhältnis 1 : 1 : 3,2 hergestellt.

Dabei wurde in der ersten Reaktionsstufe Terephthalsäure-dimethylester mit Ethylenglykol in Gegenwart von 0,05 Gew. % Titantetrabutylat umgeestert. Nach Zugabe von o-Phthalsäureanhydrid wird die Kondensation bis zu einer Säurezahl von 1,6 fortgesetzt.

Das Produkt besitzt eine Schmelzviskosität bei 150 °C von 30 mPas und bei 125 °C von 90 mPas und ist bei Raumtemperatur teigartig und teilweise kristallin.

Vergleichssubstanz Polyester Y :

Aus o-Phthalsäureanhydrid und Ethylenglykol im Molverhältnis 1 : 1,7 wurde durch Schmelzkondensation ein Polyester mit der Säurezahl 1,8 und Hydroxylzahl 270 hergestellt, der als viskose Flüssigkeit anfällt.

Herstellung der Dispersionen

Beispiel 1

Eine Mischung aus
300 Teilen Polyester A,
375 Teilen Polyether-polyol I und
150 Teilen Polyether-polyol II
werden in einem 2 l-Vierhalskolben unter Rühren und in Gegenwart von strömendem Stickstoff auf 145 °C erwärmt. Die erhaltene klare Lösung läßt man danach in 80 Minuten auf 105 °C abkühlen und fügt bei dieser Temperatur 8,2 Teile einer Dispersion aus 20 Gew. % Polyester A und 80 Gew. % Polyether-polyol I hinzu. Unter Kühlung und Rühren stellt sich nach 30 Minuten eine Temperatur der Reaktionsmischung von 93-94 °C ein, die über 90 Minuten aufrechterhalten wird, danach wird innerhalb von 2,5 Stunden auf 60 °C abgekühlt.

Nach Zugabe von 375 Teilen Polyether-polyol III läßt man die Dispersion in mehreren Stunden (ca. 16 Stunden) auf Raumtemperatur unter Rühren abkühlen.

Die lagerstabile Dispersion besaß eine Viskosität von 7 140 mPas bei 23 °C und 60,2 Gew. % der dispersen Phase lagen in einer Teilchengröße von 10,5 bis 30,5 μm vor. Die Teilchengrößenverteilung wurde in Wasser mit einem Ryco-Zählgerät gemessen.

Zur Bestimmung der Entmischungstemperatur werden ca. 30 g Dispersion in einem Reagenzglas auf 145 °C bis zur Bildung einer klaren Lösung erwärmt und danach unter Rühren mit einem Thermometer abgekühlt. Bei 80 °C trat eine deutliche Trübung auf.

Beispiel 2

Eine Mischung aus
57,6 kg Polyether-polyol I und
28,8 kg Polyester A
wird in einem 100 l-Rührkessel aus V2A mit Ankerrührer und Mantelheizung in Gegenwart von Stickstoff auf 138 °C erwärmt. Die klare Lösung läßt man innerhalb von 60 Minuten auf 105 °C abkühlen, fügt 0,8 kg einer Dispersion aus den gleichen Aufbaukomponenten hinzu, die zuvor separat hergestellt wurde, und läßt in 35 Minuten auf 93 bis 97 °C abkühlen. In diesem Temperaturbereich bildet sich nach ungefähr 30 Minuten eine weiße Dispersion. Danach läßt man in 60 Minuten auf 72 °C abkühlen, fügt unter Rühren 33,6 kg Polyester-polyol V hinzu und läßt die Mischung in 16 Stunden auf 30 °C abkühlen.

Die erhaltene lagerstabile Dispersion besaß eine Viskosität bei 23 °C von 5 600 mPas. Die Messung der Teilchengrößenverteilung in Wasser mit einem Ryco®-Zählgerät ergab, daß 59,7 Gew. % der dispersen Phase in einer Teilchengröße von 10,5 bis 25,5 μm vorliegen.

Die Entmischungstemperatur, die analog Beispiel 1 bestimmt wurde, betrug 77 °C.

Beispiel 3

Eine Mischung aus
240 Teilen Polyester A,
280 Teilen Polyester-polyol V und
480 Teilen Polyether-polyol I
wurden analog Beispiel 1 auf 140 °C erwärmt, danach läßt man die klare Lösung in 60 Minuten auf 105 °C abkühlen und fügt bei dieser Temperatur 3 Teile einer zuvor hergestellten Dispersion aus den oben genannten Ausgangskomponenten hinzu. Danach läßt man in 30 Minuten auf 95 bis 96 °C abkühlen, rührt 120 Minuten bei dieser Temperatur und läßt schließlich mit ca. 10 °C/Stunde auf 70 °C abkühlen. Die Abkühlung auf Raumtemperatur erfolgt innerhalb von ca. 16 Stunden.

Die gut fließfähige, lagerstabile Dispersion besaß eine Viskosität bei 23 °C von 6 800 mPas. Die mikrokopische Aufnahme dieser Dispersion im Maßstab 100 : 1 in polarisiertem Licht zeigte Kristallite mit Teilchengrößen von 25 bis 30 μm.

### Beispiel 4

Eine Mischung aus
240 Teilen Polyester B
280 Teilen Polyester-polyol V und
480 Teilen Polyether-polyol I
werden analog den Angaben von Beispiel 3 in eine Dispersion übergeführt.

Die lagerstabile, gut fließfähige Dispersion besaß eine Viskosität von 6 600 mPas bei 23 °C. Eine lichtmikroskopische Aufnahme dieser Dispersion in Maßstab 100 : 1 im Durchlicht zeigte Kristallite mit Teilchendurchmesser von 35 bis 45 μm.

Die entsprechend den Angaben des Beispiels 1 ermittelte Entmischungstemperatur betrug 96 °C.

### Beispiel 5

Eine Mischung aus
1 000 Teilen Polyester C und
3 000 Teilen Polyether-polyol IV
wird in einem 6 I-Vierhalskolben unter Rühren in Gegenwart von strömendem Stickstoff auf 122 °C erwärmt. Die klare Lösung läßt man in 4 Stunden 20 Minuten auf 33 °C abkühlen und fügt bei dieser Temperatur 12 Teile einer zuvor hergestellten Dispersion aus den oben genannten Ausgangskomponenten hinzu. Die Reaktionsmischung wird 12 Stunden bei 30 °C gerührt und anschließend auf Raumtemperatur abgekühlt.

Die erhaltene Dispersion besaß eine Viskosität bei 23 °C von 6 230 mPas und zeigte beim Lagern keine Sedimentation.

### Beispiel 6

Eine Mischung aus
750 Teilen Polyester D und
2 250 Teilen Polyether-polyol VI
wird unter Rühren und in Gegenwart von strömendem Stickstoff auf 126 °C erwärmt. Die entstandene klare Lösung läßt man danach in 3 Stunden 20 Minuten auf 33 °C abkühlen und fügt bei dieser Temperatur 9 Teile einer zuvor hergestellten Dispersion aus den gleichen Ausgangskomponenten hinzu. Die Mischung wird 6 Stunden bei 30 bis 34 °C gerührt und danach innerhalb von 8 Stunden auf 23 °C abgekühlt.

Die lagerfähige Dispersion besaß eine Viskosität bei 23 °C von 4 000 mPas.

Zur Bestimmung der Entmischungstemperatur wurden 25 g Polyester D und 75 g Polyether-polyol VI in einem Reagenzglas auf 140 °C erwärmt und anschließend unter Rühren mit einem Thermometer abgekühlt. Bei 30 °C entstand eine deutliche Trübung.

Wurde der Polyester D in Ethanol kristallisiert, so zeigte das Kristallisat einen Erweichungspunkt von 100,5 °C nach KSN.

### Beispiel 7

Eine Mischung aus
17,7 kg Polyether-polyol I,
28,4 kg Polyether-polyol II und
13,1 kg Polyether-polyol VIII
wird in einem 100 I-Rührkessel aus V2A, ausgestattet mit einem Ankerrührer und einer Mantelheizung, in Gegenwart von Stickstoff auf 119 °C erwärmt, bei dieser Temperatur werden unter Rühren 25 kg Polyester A hinzugefügt und die Mischung auf 148 °C erhitzt.

Die klare Lösung läßt man innerhalb von 50 Minuten auf 102 °C abkühlen, fügt 0,8 kg einer zuvor hergestellten Dispersion aus den oben genannten Ausgangskomponenten hinzu, läßt in 30 Minuten auf 90 °C abkühlen und rührt anschließend 2,5 Stunden in einem Temperaturbereich von 88 bis 92 °C. Danach läßt man die Mischung innerhalb von einer Stunde auf 68 °C abkühlen, fügt 15,8 kg Polyether-polyol IX hinzu, wodurch die Mischung auf 59 °C abgekühlt wurde. Danach läßt man die Mischung in ungefähr 18 Stunden auf Raumtemperatur abkühlen.

Die resultierende Dispersion war feinteilig, gut fließfähig und besaß eine Viskosität bei 23 °C von 25 440 mPas.

### Beispiel 8

Eine Mischung aus
90 Gew.-Teilen Polyether-polyol I und
10 Gew.-Teilen Polyester E

wird in einem Vierhalskolben unter Rühren in Gegenwart von Stickstoff auf 125 °C erwärmt, wobei eine klare Lösung gebildet wird. Zu der Lösung fügt man bei 120 °C unter Rühren mit einer Rührgeschwindigkeit von 500 Umdrehungen pro Minute 5,1 Gew.-Teile einer Dispersion, hergestellt nach Beispiel 1. Anschließend läßt man unter Rühren mit einer Geschwindigkeit von 250 Umdrehungen pro Minute die Mischung innerhalb von 20 Minuten auf 90 °C abkühlen.

In einem weiteren Zeitraum von 1,5 Stunden läßt man auf 72 °C abkühlen und danach in 16 Stunden auf Raumtemperatur.

Die erhaltene lagerstabile Dispersion besitzt eine Viskosität von 12 700 mPas bei 23 °C.

## Beispiel 9

Eine Mischung aus
70 Gew.-Teilen Polyester-polyol V und
30 Gew.-Teilen Polyester E
wird analog Beispiel 8 auf 125 °C erwärmt. Zu der klaren Lösung fügt man bei 120 °C unter Rühren mit einer Rührgeschwindigkeit von 500 Umdrehungen pro Minute 5,1 Gew.-Teile einer Dispersion, hergestellt nach Beispiel 1. Anschließend wird die Rührerdrehzahl auf 250 Umdrehungen pro Minute reduziert und man läßt innerhalb von 5 Stunden auf 35 °C und von 16 Stunden auf Raumtemperatur abkühlen. Die lagerstabile Dispersion besaß bei 23 °C eine Viskosität von 2 770 mPas.

## Vergleichsbeispiel V1

In einem 2 l-Vierhalskolben werden 906 Teile Polyether-polyol I auf 177 °C erwärmt und dazu unter Rühren und in Gegenwart von strömendem Stickstoff 160 Teile einer 180 °C heißen Schmelze von Polyester A gegeben. Die entstandene klare Lösung läßt man zunächst in 20 Minuten auf 126 °C und danach innerhalb von 3,5 Stunden auf 53 °C abkühlen. Bei dieser Temperatur bildeten sich grobteilige Festprodukte, die sich an der Glaswandung und dem Rührer niederschlagen. Eine verarbeitbare Dispersion wurde nicht erhalten.

## Vergleichsbeispiel V2

Eine Mischung aus
480 Teilen Polyether-polyol I,
280 Teilen Polyester-polyol V und
240 Teilen Polyester Z
wurden analog den Angaben von Beispiel 1 auf 210 °C erwärmt. Bei Abkühlen der entstandenen klaren Lösung trat bei 184 °C eine Trübung auf, die sich bei fallender Temperatur der Mischung verstärkte. Nach ungefähr 2 Stunden wurde bei 140 °C eine weiße Dispersion erhalten, die nach weiteren 3 Stunden und Abkühlung auf 65 °C einen steifen Kristallbrei bildete, der sich an den Glaswandungen absetzte. Der Kristallbrei war bei Raumtemperatur völlig steif und nicht mehr fließfähig.

## Vergleichsbeispiel V3

Eine Mischung aus
120 Teilen Polyester A und
1 080 Teilen Polyether-polyol VI
wurden analog den Angaben von Beispiel 1 auf 184 °C erwärmt, wobei eine deutliche Trübung erhalten blieb. Läßt man die Mischung innerhalb von 4,5 Stunden auf 62 °C abkühlen, so ballte sich der Polyester zusammen und schlug sich am Rührer nieder.

Zur Prüfung der Mischbarkeit wurden 25 g Polyester A und 75 g Polyether-polyol VI in einem Reagenzglas unter Rühren mit einem Thermometer auf 160 °C erwärmt. Bis zu dieser Temperatur bildete sich keine klare Lösung.

## Vergleichsbeispiel V4

Aus 70 Gew.-Teilen Polyether-polyol VI und 30 Gew.-Teilen Polyester Y wird unter Rühren und Erwärmen auf 80 °C eine klare Lösung hergestellt, aus der sich beim Abkühlen auf Raumtemperatur keine Kristallite abscheiden.

Herstellung von Polyurethan- und Polyisocyanuratkunststoffen:

## Beispiel 10

Zur Herstellung eines harten Polyurethan-Schaumstoffes werden die Komponente A, bestehend aus
100    Gew.-Teilen einer Dispersion, hergestellt gemäß Beispiel 1,
1    Gew.-Teil eines Schaumstabilisators auf Silikonbasis (DC 190 der Firma Dow Corning Corp., Midland),

1,6 Gew.-Teilen eines Katalysatorgemisches aus 80 Gew.% Triethylamin und 20 Gew.% Endomethylenpiperazin und

14,8 Gew.-Teilen Trichlorfluormethan

und die Komponente B, bestehend aus

83,23 Gew.-Teilen einer Mischung aus Diphenylmethan-diisocyanaten und Polyphenyl-polymethylen-polyisocyanaten mit einem NCO-Gehalt von 31 Gew.%

bei Raumtemperatur 20 Sekunden lang intensiv vermischt, die schäumfähige Mischung wird in einer offenen Form eingebracht und aufschäumen gelassen.

An dem erhaltenen Polyurethan-Schaumstoff wurden folgende mechanische Eigenschaften ermittelt :

| | |
|---|---|
| Startzeit : | 53 Sekunden |
| Abbindezeit : | 151 Sekunden |
| Steigzeit : | 246 Sekunden |
| Raumgewicht : | 60,4 kg/m$^3$ |
| | |
| Biegefestigkeit nach DIN 53 423 | |
| parallel zur Schäumrichtung : | 0,86 N/mm$^2$ |
| quer zur Schäumrichtung : | 0,66 N/mm$^2$ |
| Druckfestigkeit nach DIN 53 421 | |
| parallel zur Schäumrichtung : | 0,4  N/mm$^2$ |
| quer zur Schäumrichtung : | 0,29 N/mm$^2$ |

## Beispiel 11

Zur Herstellung eines harten Polyisocyanurat-Schaumstoffes werden die
Komponente A, bestehend aus

100  Gew.-Teilen einer Dispersion, hergestellt gemäß Beispiel 2,

0,67  Gew.-Teilen eines Schaumstabilisators auf Silikonbasis (DC 193 der Firma Dow Corning Corp., Midland, Michigan),

17,65  Gew.-Teilen Trichlorethylphosphat,

0,067 Gew.-Teilen Triethylamin,

2,0  Gew.-Teilen einer 35 gewichtsprozentigen Lösung von Kaliumformiat in Ethylenglykol und

39,3  Gew.-Teilen Trichlorfluormethan

und die Komponente B, bestehend aus

165,2  Gew.-Teilen einer Mischung aus Diphenylmethan-diisocyanaten und Polyphenylpolymethylen-polyisocyanaten (Roh-MDI) mit einem NCO-Gehalt von 31 Gew.%

bei Raumtemperatur 30 Sekunden lang intensiv gemischt, die schäumfähige Mischung wird in eine offene Form eingebracht und aufschäumen gelassen.

An dem erhaltenen Schaumstoff wurden folgende mechanische Eigenschaften gemessen :

| | |
|---|---|
| Startzeit : | 62 Sekunden |
| Abbindezeit : | 130 Sekunden |
| Steigzeit : | 200 Sekunden |
| Raumgewicht : | 33,9 kg/m$^3$ |
| Brandtest nach DIN 4102 : B2 bestanden | |
| Biegefestigkeit nach DIN 53 423 | |
| parallel zur Schäumrichtung : | 0,23 N/mm$^2$ |
| Druckfestigkeit nach DIN 53 421 | |
| parallel zur Schäumrichtung : | 0,27 N/mm$^2$ |
| quer zur Schäumrichtung : | 0,13 N/mm$^2$ |

## Beispiel 12

Zur Herstellung eines harten Polyurethanschaumstoffes werden die Komponente A, bestehend aus

100  g einer Dispersion, hergestellt gemäß Beispiel 1

15  g eines bromierten und chlorierten Polyether-polyols ([R]Ixol B 251 der Firma Solvay, Paris, Frankreich)

1,0 g eines Schaumstabilisators auf Silikonbasis (DC 190 der Dow Corning Corp.)

0,1 g Triethylamin und

5,5 g Trichlorfluormethan

und die Komponente B, bestehend aus

103,6 g Roh-MDI mit einem NCO-Gehalt von 31 Gew.%

bei Raumtemperatur 30 Sekunden lang intensiv gemischt, die schäumfähige Mischung wird in einen Karton (21,5 × 21,5 × 21,5 cm) gegossen und aufschäumen gelassen.

Der erhaltene Polyurethanschaumstoff zeigte folgende charakteristische Eigenschaften :
Startzeit : 10 Minuten
Raumgewicht : 316 kg/m³
max. Reaktionstemperatur im Schaumstoffkern : 126 °C.

## Beispiel 13 a-c

### Herstellung eines halbharten Polyurethanschaumstoffes

| Beispiel 13 | a | b | c |
| --- | --- | --- | --- |
| | [Gew.-Teile] | | |
| **Komponente A:** | | | |
| Polyether-polyol aus Trimethylolpropan/ Propylenoxid/Ethylenoxid (80:20 Gew.%) OHZ: 26,5 | 68,05 | 62,85 | 58,05 |
| Polyether-polyol aus Sucrose/Propylen- oxid OHZ: 400 | 22,52 | 22,52 | 22,52 |
| Dispersion hergestellt gemäß Bei- spiel 6 | 5,0 | 10,0 | 15,0 |
| 33 %ige Lösung von Endomethylenpipera- zin in Dipropylenglykol | 1,3 | 1,5 | 1,3 |
| Dimethylethylamin | 0,18 | 0,18 | 0,18 |
| Wasser | 2,95 | 2,95 | 2,95 |
| **Komponente B:** | | | |
| Roh-MDI | | | |
| Mischungsverhältnis A : B = 100: | 76 | 76 | 75 |

Zur Herstellung der Schaumstoffe werden 477 g der Komponente A und 363 g der Komponente B in einem 2,5 l-Becherglas von 15 cm Durchmesser mit einem Laborrührer (Durchmesser der Rührerdrehscheibe 60 mm ; Drehzahl des Rührers 1 350 Umdrehungen/Min.) 10 Sekunden lang intensiv gemischt. Das schäumfähige Gemisch wird in eine auf 47,5 ± 2,5 °C temperierte Stahlform mit den Dimensionen 700 × 100 × 100 mm eingebracht und die Form geschlossen. Nach 6 bis 6,5 Minuten wurde die Arretierung des Deckels gelöst. Die Entformzeit der Teile betrug 7 bis 7,5 Minuten.

An den erhaltenen Formteilen wurden folgende charakteristische Eigenschaften gemessen :

| Beispiele 13 | a | b | c |
| --- | --- | --- | --- |
| Startzeit [sec] | 12 | 12 | 15 |
| Steigzeit [sec] | 120 | 95 | 130 |
| Raumgewicht (freigeschäumt) [kg/m³] | 48,5 | 47 | 50 |
| geschlossene Zellen [%] | 38 | 48 | 58 |
| Entformzeit [Min] | 7 | 7,3 | 7,5 |

# 0 062 204

## Vergleichsbeispiel

Verfährt man analog den Angaben von Beispiel 13a, verzichtet jedoch auf die Mitverwendung der Dispersion nach Beispiel 6, so erhält man ein Formteil mit einem Anteil an geschlossenen Zellen von 55 %. Die Entformzeit betrug 12 Minuten.

## Beispiel 14

Zur Herstellung eines kompakten Polyurethan-Elastomeren werden die
Komponente A, bestehend aus
98 Gew.-Teilen einer Dispersion nach Beispiel 7,
0,7 Gew.-Teilen eines Schaumstabilisators auf Silikonbasis (OS 710 der Bayer AG)
0,35 Gew.-Teilen eines Schaumstabilisators auf Silikonbasis (DC 190 der Dow Corning Corp.)
0,62 Gew.-Teilen einer 33 %igen Lösung von Endomethylenpiperazin in Dipropylenglykol und
0,75 Gew.-Teilen eines Fettsäureesters (Zusatzmittel SM der Bayer AG)
und die Komponente B, bestehend aus
110 Gew.-Teilen einer Mischung aus
80 Gew. % Roh-MDI (NCO-Gehalt 31 Gew. %) und
20 Gew. % eines präpolymeren Isocyanates aus 49 Gew. % Toluylendiisocyant (TDI 80, NCO-Gehalt 48 Gew. %, 80 Gew. % 2,4-Isomere) 41,2 Gew. % Polyetherpolyolen auf Basis Trimethylolpropan/Propylenoxid (OH-Zahl 42) 9,8 Gew. % Polyether auf Basis Diethylentriamin/Glycerin/Propylenoxid (OH-Zahl 550) intensiv gemischt, in eine Metallform gegossen und bei 25 °C in 12 Stunden aushärten gelassen.
An dem erhaltenen Formteil wurden folgende Eigenschaften gemessen :

| | |
|---|---|
| Startzeit [sec] | 50 bis 60 |
| Steigzeit [sec] | 200 |
| Raumgewicht [kg/m$^3$] | 230 |
| Reaktionstemperatur [°C] | 142 |
| nach 10 Minuten | |
| Kernrisse : | keine |

## Vergleichsbeispiel

Zur Herstellung eines kompakten Polyurethan-Elastomeren werden die
Komponente A, bestehend aus
22,66 Gew.-Teilen eines Polyether-polyols aus Sorbit/Wasser/Propylenoxid OHZ 490
20,65 Gew.-Teilen eines Polyether-polyols aus Ethylendiamin/Propylenoxid OHZ 450
33,65 Gew.-Teilen eines Polyether-polyols aus Glycerin/Propylenoxid OHZ 400
23,20 Gew.-Teilen eines Polyether-polyols aus Sucrose/Propylenoxid OHZ 400
0,17 Gew.-Teilen eines Schaumstabilisators auf Silikonbasis (OS 710 der Bayer AG)
0,35 Gew.-Teilen eines Schaumstabilisators auf Silikonbasis (DC 190 der Dow Corning Corp.) und
0,62 Gew.-Teilen einer 33 %igen Lösung von Endomethylenpiperazin in Dipropylenglykol
und die Komponente B, bestehend aus
110 Gew.-Teilen einer Isocyanatkomponente wie in Beispiel 14
intensiv gemischt, in eine Metallform gegossen und bei 25 °C in 12 Stunden aushärten gelassen.
Das Formteil besaß folgende Eigenschaften :

| | |
|---|---|
| Startzeit [sec] | 60 |
| Steigzeit [sec] | 200 |
| Raumgewicht [kg/m$^3$] | 220 |
| Reaktionstemperatur nach | |
| 10 Minuten [°C] | 169 |
| Kernrisse | ja |

**Patentansprüche** (für die Vertragsstaaten : BE, CH, DE, FR, IT, LI, NL, SE)

1. Lagerstabile Dispersionen, die enthalten
a) 5 bis 35 Gew. %, bezogen auf die gesamte Dispersion, eines Polyesters aus Isophthalsäure, Terephthalsäure oder einer Mischung aus Terephthalsäure und aromatischen und/oder aliphatischen Dicarbonsäuren und Alkoholen mit 1 bis 6 Kohlenstoffatomen, als disperse Phase und
b) 65 bis 95 Gew. %, bezogen auf die gesamte Dispersion, einer Polyhydroxylverbindung mit einem Schmelzpunkt unter 30 °C als kohärente Phase, in welcher die disperse Phase (a) bei Temperaturen oberhalb 35 °C vollständig löslich ist, dadurch gekennzeichnet, daß die Komponente (a) aufweist und daß mehr als 50 Gew. % der dispergierten Phase in einer Teilchengröße von 10,5 bis 100 µm vorliegen eine Schmelzviskosität bei 150 °C von 15 bis 3 000 mPas.

16

2. Lagerstabile Dispersionen nach Anspruch 1, dadurch gekennzeichnet, daß der Polyester (a) mindestens einen Rest mit einem Zerewitinoff-aktiven Wasserstoffatom gebunden enthält.

3. Lagerstabile Dispersionen nach Anspruch 1, dadurch gekennzeichnet, daß zur Herstellung des Polyesters (a) Isophthalsäure verwendet wird.

4. Lagerstabile Dispersionen nach Anspruch 1, dadurch gekennzeichnet, daß zur Herstellung des Polyesters (a) Mischungen aus Terephthalsäure und aromatischen und/oder aliphatischen Dicarbonsäuren mit einem Terephthalsäuregehalt von 20 bis 95 Mol. %, bezogen auf die Dicarbonsäuremischung, verwendet werden.

5. Lagerstabile Dispersionen nach Anspruch 1, dadurch gekennzeichnet, daß man zur Herstellung des Polyesters (a) als Alkohole Diole mit 2 bis 6 Kohlenstoffatomen und primären OH-Gruppen verwendet.

6. Lagerstabile Dispersionen nach Anspruch 1, dadurch gekennzeichnet, daß zur Herstellung des Polyesters (a) Isophthalsäure und Neopentylglykol oder Mischungen aus Neopentylglykol und Ethylenglykol, Butandiol-1,4 oder Hexandiol-1,6 verwendet werden.

7. Lagerstabile Dispersionen nach Anspruch 1, dadurch gekennzeichnet, daß zur Herstellung des Polyesters (a) Isophthalsäure, Neopentylglykol und Ethylenglykol im Molverhältnis Isophthalsäure zur Summe der Diole von 1 : 1,25 bis 1 : 2 eingesetzt werden.

8. Lagerstabile Dispersionen nach Anspruch 1, dadurch gekennzeichnet, daß die Polyester (a) eine Schmelzviskosität bei 150 °C von 30 bis 700 mPas besitzen und die Polyhydroxylverbindungen (b) eine Funktionalität von 2 bis 8 und eine Hydroxylzahl von 20 bis 800 aufweisen, wobei mehr als 50 Gew. % der dispergierten Phase in einer Teilchengröße von 12 bis 100 µm vorliegen.

9. Verfahren zur Herstellung von lagerstabilen Dispersionen, dadurch gekennzeichnet, daß man

a) 5 bis 35 Gew.-Teile eines Polyesters aus Isophthalsäure, Terephthalsäure oder einer Mischung aus Terephthalsäure und aromatischen und/oder aliphatischen Dicarbonsäuren und Alkoholen mit 1 bis 6 Kohlenstoffatomen mit einer Schmelzviskosität bei 150 °C von 15 bis 3 000 mPas in

b) 65 bis 95 Gew.-Teilen einer Polyhydroxylverbindung mit einer Funktionalität von 2 bis 8, einer Hydroxylzahl von 20 bis 800 und einem Schmelzpunkt kleiner als 30 °C
bei Temperaturen von 35 bis 160 °C löst, der Lösung bei einer Temperatur oberhalb der Entmischungstemperatur der Komponenten (a) und (b) und unterhalb der Schmelztemperatur des Kristallisationsbeschleunigers 0,01 bis 3,0 Gew.-Teile pro 100 Gew.-Teile Lösung mindestens eines organischen und/oder anorganischen Kristallisationsbeschleunigers einverleibt und die Mischung abkühlen läßt.

10. Verwendung der lagerstabilen Dispersionen nach Anspruch 1 zur Herstellung von gegebenenfalls zelligen Polyurethan- und/oder Polyisocyanurat-Kunststoffen, die die Polyester (a) vollständig in das Polyurethangerüst eingebaut enthalten.

**Patentansprüche** (für den Vertragsstaat AT)

1. Verfahren zur Herstellung von lagerstabilen Dispersionen, dadurch gekennzeichnet, daß man

a) 5 bis 35 Gew.-Teile eines Polyesters aus Isophthalsäure, Terephthalsäure oder einer Mischung aus Terephthalsäure und aromatischen und/oder aliphatischen Dicarbonsäuren und Alkoholen mit 1 bis 6 Kohlenstoffatomen mit einer Schmelzviskosität bei 150 °C von 15 bis 3 000 mPas in

b) 65 bis 95 Gew.-Teilen einer Polyhydroxylverbindung mit einer Funktionalität von 2 bis 8, einer Hydroxylzahl von 20 bis 800 und einem Schmelzpunkt kleiner als 30 °C
bei Temperaturen von 35 bis 160 °C löst, der Lösung bei einer Temperatur oberhalb der Entmischungstemperatur der Komponenten (a) und (b) und unterhalb der Schmelztemperatur des Kristallisationsbeschleunigers 0,01 bis 3,0 Gew.-Teile pro 100 Gew.-Teile Lösung mindestens eines organischen und/oder anorganischen Kristallisationsbeschleunigers einverleibt und die Mischung abkühlen läßt.

2. Verwendung der lagerstabilen Dispersionen nach Anspruch 1 zur Herstellung von gegebenenfalls zelligen Polyurethan- und/oder Polyisocyanurat-Kunststoffen, die die Polyester (a) vollständig in das Polyurethangerüst eingebaut enthalten.

**Claims** (for the Contracting states : BE, CH, DE, FR, IT, LI, NL, SE)

1. A storage-stable dispersion containing
(a) as disperse phase, 5 to 35 % by weight, based on the whole dispersion, of a polyester of isophthalic acid, terephthalic acid or a mixture of terephthalic acid and aromatic and/or aliphatic dicarboxylic acids and alcohols of 1 to 6 carbon atoms, and
(b) as coherent phase, 65 to 95 % by weight, based on the whole dispersion, of a polyhydroxyl compound having a melting point below 30 °C, in which the disperse phase (a) is completely soluble at temperatures above 35 °C,
wherein component (a) has a melt viscosity at 150 °C of 15 to 3 000 mPas, and more than 50 % by weight of the disperse phase is present in the form of particles having a size of from 10.5 to 100 µm.

2. A storage-stable dispersion as claimed in claim 1, wherein the polyester (a) contains at least one radical with a Zerewitinoff-active hydrogen atom in bonded form.

3. A storage-stable dispersion as claimed in claim 1, wherein isophthalic acid is used to prepare the polyester (a).

4. A storage-stable dispersion as claimed in claim 1, wherein mixtures of terephthalic acid and aromatic and/or aliphatic dicarboxylic acids with a terephthalic acid content of 20 to 95 mole%, based on the dicarboxylic acid mixture, are used to prepare the polyester (a).

5. A storage-stable dispersion as claimed in claim 1, wherein diols with 2 to 6 carbon atoms and primary hydroxyl groups are used as alcohols to prepare the polyester (a).

6. A storage-stable dispersion as claimed in claim 1, wherein isophthalic acid and neopentyl glycol or mixtures of neopentyl glycol and ethylene glycol, 1,4-butanediol or 1,6-hexanediol are used to prepare the polyester (a).

7. A storage-stable dispersion as claimed in claim 1, wherein isophthalic acid, neopentyl glycol and ethylene glycol are used to prepare the polyester (a), the molar ratio of isophthalic acid to the sum of the diols being 1 : 1.25 to 1 : 2.

8. A storage-stable dispersion as claimed in claim 1, wherein the polyesters (a) have a melt viscosity at 150 °C of 30 to 700 mPas, and the polyhydroxyl compounds (b) have a functionality of 2 to 8 and a hydroxyl number of 20 to 800, more than 50 % by weight of the disperse phase being present in the form of particles having a size of from 12 to 100 μm.

9. A process for preparing a storage-stable dispersion, wherein

(a) 5 to 35 parts by weight of a polyester of isophthalic acid, terephthalic acid or a mixture of terephthalic acid and aromatic and/or aliphatic dicarboxylic acids and alcohols of 1 to 6 carbon atoms, which polyester has a melt viscosity at 150 °C of 15 to 3 000 mPas, is dissolved, at 35 to 160 °C, in

(b) 65 to 95 parts by weight of a polyhydroxyl compound having a functionality of 2 to 8, a hydroxyl number of 20 to 800, and a melting point below 30 °C,

from 0.01 to 3.0 parts by weight, per 100 parts by weight of solution, of at least one organic and/or inorganic crystallization accelerator is incorporated in the solution at a temperature above the cloud point of components (a) and (b) and below the melting temperature of the crystallization accelerator, and the mixture is allowed to cool.

10. The use of a storage-stable dispersion as claimed in claim 1 for the production of cellular or non-cellular polyurethane and/or polyisocyanurate plastics in which the polyester (a) is completely incorporated in the polyurethane.

## Claims (for the Contracting state AT)

1. A process for preparing a storage-stable dispersion, wherein

(a) 5 to 35 parts by weight of a polyester of isophthalic acid, terephthalic acid or a mixture of terephthalic acid and aromatic and/or aliphatic dicarboxylic acids and alcohols of 1 to 6 carbon atoms, which polyester has a melt viscosity at 150 °C of 15 to 3 000 mPas is dissolved, at 35 to 160 °C, in

(b) 65 to 95 parts by weight of a polyhydroxyl compound having a functionality of 2 to 8, a hydroxyl number of 20 to 800, and a melting point below 30 °C,

from 0.01 to 3.0 parts by weight, per 100 parts by weight of solution, of at least one organic and/or inorganic crystallization accelerator is incorporated in the solution at a temperature above the cloud point of components (a) and (b) and below the melting temperature of the crystallization accelerator, and the mixture is allowed to cool.

2. The use of a storage-stable dispersion as defined in claim 1 for the production of cellular or non-cellular polyurethane and/or polyisocyanurate plastics in which the polyester (a) is completely incorporated in the polyurethane.

## Revendications (pour les Etats contractants : BE, CH, DE, FR, IT, LI, NL, SE)

1. Dispersions stables au stockage, qui contiennent

a) 5 à 35 % en poids, par rapport à l'ensemble de la dispersion, d'un polyester d'acide isophtalique, d'acide téréphtalique ou d'un mélange d'acide téréphtalique et d'acides dicarboxyliques aromatiques et/ou aliphatiques et d'alcools ayant 1 à 6 atomes de carbone, en tant que phase dispersée, et

b) 65 à 95 % en poids, par rapport à l'ensemble de la dispersion, d'un composé polyhydroxyle d'un point de fusion inférieur à 30 °C, en tant que phase cohérente, dans laquelle la phase dispersée (a) est complètement soluble à des températures supérieures à 35 °C

caractérisées par le fait que le composant (a) possède une viscosité de fusion, à 150 °C, de 15 à 3 000 mPas et que plus de 50 % en poids de la phase dispersée se présente avec une grosseur de particules de 10,5 à 100 μm.

2. Dispersions stables au stockage selon la revendication 1, caractérisées par le fait que le polyester (a) contient au moins un reste lié avec un atome d'hydrogène actif selon Zerewitinoff.

3. Dispersions stables au stockage selon la revendication 1, caractérisées par le fait que, pour la préparation du polyester (a), on utilise de l'acide isophtalique.

4. Dispersions stables au stockage selon la revendication 1, caractérisées par le fait que, pour la préparation du polyester (a), on utilise des mélanges d'acide téréphtalique et d'acides dicarboxyliques aromatiques et/ou aliphatiques, avec une teneur en acide téréphtalique de 10 à 95 % (moles), par rapport au mélange d'acides dicarboxyliques.

5. Dispersions stables au stockage selon la revendication 1, caractérisées par le fait que, pour la préparation du polyester (a), on utilise, comme alcools, des diols ayant 2 à 6 atomes de carbone et des groupes OH primaires.

6. Dispersions stables au stockage selon la revendication 1, caractérisées par le fait que, pour la préparation du polyester (a), on utilise de l'acide isophtalique et du néopentylglycol ou des mélanges de néopentylglycol et d'éthylèneglycol, butanediol-1,4 ou hexanediol-1,6.

7. Dispersions stables au stockage selon la revendication 1, caractérisées par le fait que, pour la préparation du polyester (a), on utilise de l'acide isophtalique, du néopentylglycol et de l'éthylèneglycol, en rapport molaire, acide isophtalique par rapport à la somme des diols, de 1/1, 25 à 1/2.

8. Dispersions stables au stockage selon la revendication 1, caractérisées par le fait que le polyester (a) possède une viscosité de fusion à 150 °C, de 30 à 700 mPas et les composés polyhydroxylés (b) une fonctionnalité de 2 à 8 et un indice d'hydroxyle de 20 à 800, plus de 50 % en poids de phase dispersée se trouvant sous une grosseur de particules de 12 à 100 μm.

9. Procédé de préparation de dispersions stables au stockage, caractérisé par le fait qu'à des températures de 35 à 160 °C, on dissout

a) 5 à 35 % en poids d'un polyester d'acide isophtalique, d'acide téréphtalique ou d'un mélange d'acide téréphtalique et d'acides dicarboxyliques aromatiques et/ou aliphatiques et d'alcools ayant 1 à 6 atomes de carbone, et d'une viscosité de fusion à 150 °C de 15 à 3 000 mPas, dans 65 à 95 % en poids d'un composé polyhydroxyle d'une fonctionnalité de 2 à 8, un indice d'hydroxyle de 20 à 800 et un point de fusion inférieur à 30 °C,

on incorpore à la solution 0,01 à 3 parties en poids par 100 parties en poids de solution d'au moins un accélérateur de cristallisation organique et/ou inorganique, à une température supérieure à la température de démixtion des composants (a) et (b) et inférieure à la température de fusion de l'accélérateur de cristallisation, et on laisse refroidir le mélange.

10. Utilisation des dispersions stables au stockage selon la revendication 1, pour la préparation de matières plastiques de polyuréthane et/ou polyisocyanurate, éventuellement cellulaires, qui contiennent le polyester (a) complètement incorporé dans le squelette polyuréthane.


**Revendications** (pour l'Etat contractant AT)

1. Procédé de préparation de dispersions stables au stockage, caractérisé par le fait qu'à des températures de 35 à 160 °C, on dissout :

a) 5 à 35 % en poids d'un polyester d'acide isophtalique, d'acide téréphtalique ou d'un mélange d'acide téréphtalique et d'acides dicarboxyliques aromatiques et/ou aliphatiques et d'alcools ayant 1 à 6 atomes de carbone, et d'une viscosité de fusion, à 150 °C, de 15 à 3 000 mPas, dans 65 à 95 % en poids d'un composé polyhydroxyle d'une fonctionnalité de 2 à 8, un indice d'hydroxyle de 20 à 800 et un point de fusion inférieur à 30 °C,

on incorpore à la solution 0,01 à 3 parties en poids par 100 parties en poids de solution d'au moins un accélérateur de cristallisation organique et/ou inorganique, à une température supérieure à la température de démixtion des composants (a) et (b) et inférieure à la température de fusion de l'accélérateur de cristallisation, et on laisse refroidir le mélange.

2. Utilisation des dispersions stables au stockage selon la revendication 1, pour la préparation de matières plastiques de polyuréthane et/ou polysocyanurate, éventuellement cellulaires, qui contiennent le polyester (a) complètement incorporé dans le squelette polyuréthane.